# EUROPÄISCHE PATENTSCHRIFT

(11) **EP 4 484 216 B1**
(45) Veröffentlichungstag und Bekanntmachung des Hinweises auf die Patenterteilung: **06.05.2026**
(21) Anmeldenummer: 23181684.4
(22) Anmeldetag: 27.06.2023
(51) Int. Cl.: B60P 1/64, B60P 7/13

(54) **ANHÄNGER ZUM TRANSPORTIEREN VON CONTAINERN**
TRAILER FOR TRANSPORTING CONTAINERS
REMORQUE POUR LE TRANSPORT DE CONTENEURS

(43) Veröffentlichungstag der Anmeldung: 01.01.2025
(73) Patentinhaber: Pongratz Trailer-Group GmbH, 8772 Traboch (AT)
(72) Erfinder: Kogler, Gernot, 8600 Oberaich (AT); Oberer, Jürgen, 8600 Oberaich (AT); Stadler, Karl Christian, 8600 Oberaich (AT); Thonhofer, Johann, 8600 Oberaich (AT); Busic, Ilija, 8600 Oberaich (AT); Baresic, Kristijan, 8600 Oberaich (AT)
(74) Vertreter: Lorenz Seidler Gossel Part. mbB

(56) Entgegenhaltungen:
- EP-A1- 2 765 029
- EP-B1- 3 604 084
- DE-A1- 102017 127 298
- US-A- 3 621 236

## Beschreibung

Die vorliegende Erfindung betrifft einen Anhänger zum Transportieren von Containern nach dem Oberbegriff des Anspruchs 1.

Anhänger für Pkw oder Lkw werden zum Transport einer Vielzahl unterschiedlicher Güter und Gegenstände verwendet und weisen als Grundelemente typischerweise eine Kupplungseinrichtung zum lösbaren Kuppeln mit dem jeweiligen Fahrzeug, eine oder mehrere Radachsen sowie eine Rahmenstruktur auf, an bzw. auf der die zu transportierenden Güter gelagert werden.

Derartige Anhänger können ebenfalls zum Transport von Containern verwendet werden (z.B. Lager- oder Bürocontainer), wobei die Container entsprechend am Anhänger bzw. auf der Rahmenstruktur zu sichern sind. Die Container können unterschiedliche Abmessungen aufweisen, die in der Regel genormt sind (z.B. 10'- oder 20'-Container). Um diese standardisierten Container mit der jeweiligen Transportvorrichtung sowie untereinander verriegeln zu können, weisen diese üblicherweise an Eckbeschläge mit mehreren Öffnungen auf, die mittels Twistlocks verriegelbar sind.

Zum Transport von Containern sind im Stand der Technik unterschiedliche Konzepte bekannt geworden. Die EP 3 604 084 B1 offenbart ein Fahrzeug mit einem daran integrierten Rahmengerüst, das über ein spezielles Befestigungssystem für unterschiedliche Anbauten verfügt. Die US 3,621,236 A1 offenbart einen Lkw-Anhänger zum Transport von Containern, wobei die Twist-Lock-Verschlüsse zur Befestigung der Container auf längsverschieblichen Schlitten angeordnet sind und zu Halterungen für Zurrgurte bzw. Ketten umgebaut werden können. Die DE 10 2017 127 298 A1 offenbart einen Nachrüstrahmen zur Befestigung an einer Ladefläche von Lkws oder Anhängern, um darauf Container befestigen zu können. Die EP 2 765 029 A1 offenbart einen für den Containertransport geeigneten Anhänger, wobei die Position der Twist-Lock-Verschlüsse in Querrichtung verstellt werden kann, indem die Verschlüsse an Trägerstangen sitzen, die axial in den strukturgebenden Querstreben des Anhänger-Rahmengerüsts versenkt sind.

Der vorliegenden Erfindung liegt die Aufgabe zugrunde, einen Anhänger anzugeben, mittels welchem Container mit unterschiedlichen Abmessungen sicher transportierbar sind. Die Containerverriegelung soll dabei insbesondere einfach und flexibel an die gewünschte Containergröße anpassbar sein.

Erfindungsgemäß wird diese Aufgabe durch einen Anhänger mit den Merkmalen des Anspruchs 1 gelöst. Vorteilhafte Ausführungsformen der Erfindung ergeben sich aus den Unteransprüchen und der nachfolgenden Beschreibung.

Demnach wird ein Anhänger vorgeschlagen, welcher sich insbesondere zur Verwendung mit einem Pkw eignet und eine Kupplungseinrichtung zum lösbaren Kuppeln mit einem Fahrzeug (d.h. einem Pkw), mindestens eine Radachse sowie eine Rahmenstruktur umfasst. Um den Container an der Rahmenstruktur sichern und mittels des Anhängers transportieren zu können, umfasst der Anhänger erfindungsgemäß mehrere Verriegelungseinheiten, die mit entsprechenden Befestigungselementen des Containers lösbar verriegelbar sind. Bei besagten Befestigungselementen kann es sich um die eingangs erwähnten Eckbeschläge handeln, wie sie beispielsweise bei ISO-Containern, aber auch bei Containern, die nicht dem ISO-Standard entsprechen, häufig vorhanden sind. Vorzugsweise umfasst der Anhänger mindestens vier Verriegelungseinheiten.

Erfindungsgemäß sind die Verriegelungseinheiten nicht allesamt fest mit der Rahmenstruktur verbunden (beispielsweise verschweißt), sondern zumindest zwei der Verriegelungseinheiten sind variabel verstellbar an der Rahmenstruktur positionierbar. Mit anderen Worten lassen sich die variabel verstellbaren Verriegelungseinheiten relativ zur Rahmenstruktur bewegen und an unterschiedlichen Stellen lagern, sodass sich die Abstände zwischen den jeweiligen Verriegelungseinheiten an die Abmessungen des zu transportierenden Containers flexibel anpassen lassen.

Die Verriegelungseinheiten lassen sich zumindest entlang einer Richtung, insbesondere entlang der Längsachse des Anhängers bzw. der Rahmenstruktur, relativ zueinander verstellen, sodass Container mit unterschiedlichen Längen aufgenommen werden können. Die Rahmenstruktur weist eine geeignete Länge auf, die beispielsweise an das größte zu transportierende Containermaß angepasst sein kann. Beispielsweise kann die Rahmenstruktur eine Länge von mindestens 6 m (beispielsweise 6.2 m) aufweisen, um 20'-Container mit einer Länge von 6.058 m transportieren und mittels der Verriegelungseinheiten sichern zu können. Dank der Verstellbarkeit der variabel verstellbaren Verriegelungseinheiten können auch kleinere Containergrößen (z.B. 16', 15', 10', 9' und/oder 8') transportiert werden, wobei die Abstände zwischen den jeweiligen Verriegelungseinheiten entsprechend anzupassen sind.

Durch diese Lösung lassen sich mit einem einzigen Anhänger unterschiedliche Containergrößen transportieren, sodass der erfindungsgemäße Anhänger flexibel eingesetzt werden kann und nicht mehrere Anhänger für unterschiedliche Containermaße vorgehalten werden müssen.

Die Rahmenstruktur weist vorzugsweise einen starren Aufbau auf, wobei die variabel verstellbaren Verriegelungseinheiten relativ zur Rahmenstruktur positionierbar sind. Dadurch begibt sich ein einfacherer Aufbau des erfindungsgemäßen Anhängers.

Der Begriff "Container" soll nicht einschränkend verstanden und beispielsweise mit ISO-Containern gleichgesetzt werden. Zwar kann es sich bei den mittels des erfindungsgemäßen Anhängers transportierbaren Containern um ISO-Container handeln. Die vorliegende Erfindung ist allerdings nicht darauf beschränkt. So könnte es sich bei dem zu transportierbaren Container auch um einen nicht dem ISO-Standard entsprechenden Container bzw. nicht-ISO-Container, einen offenen Container, einen Bürocontainer (bzw. generell ein Raummodul), einen Kühlcontainer, einen Lagercontainer beliebiger Art usw. handeln. Auch die Form der zu den Verriegelungseinheiten passenden Befestigungselemente ist nicht auf Eckbeschläge von ISO-Containern beschränkt, sondern können prinzipiell beliebig ausgestaltet sein - ebenso der Verriegelungsmechanismus der Verriegelungseinheiten. Bevorzugt lassen sich mittels des erfindungsgemäßen Anhängers jedoch unter anderem ISO-Container und nicht-ISO-Container mit den eingangs erwähnten Eckbeschlägen sichern und transportieren.

Der Ausdruck "variabel verstellbar" kann sowohl ein kontinuierliches Verstellen als auch ein Verstellen um diskrete Schritte (z.B. Platzierung der verstellbaren Verriegelungseinheiten an definierten, voneinander beabstandeten Stellen) umfassen.

Gemäß der Erfindung ist daher vorgesehen, dass die Verriegelungseinheiten jeweils einen Twistlock zur Verriegelung mit einem Eckbeschlag eines Containers umfassen. Bei den mittels der Twistlocks verriegelbaren Containern kann es sich, wie bereits erwähnt, um ISO-Container oder nicht-ISO-Container (wie z.B. Büro- oder Lagercontainer) handeln. Die Twistlocks können einen an sich bekannten Aufbau aufweisen, wobei sämtliche bekannte Twistlocktypen in Frage kommen (z.B. rechtsdrehende, linksdrehende, manuell betätigbare, semiautomatisch betätigbare, hydraulisch betätigbare, elektrisch betätigbare und/oder pneumatisch betätigbare Twistlocks). Bevorzugt sind die Twistlocks manuell betätigbar, wodurch sich ein besonders einfacher Aufbau des Anhängers ergibt, da kein Anschluss an hydraulische, pneumatische oder elektrische Leitungen vorgesehen sein muss und sich die variabel verstellbaren Verriegelungseinheiten unkompliziert und ungeachtet etwaiger Leitungen bzw. Kabel versetzen lassen.

In einer weiteren möglichen Ausführungsform ist vorgesehen, dass die variabel verstellbaren Verriegelungseinheiten lösbar mit der Rahmenstruktur verbindbar sind. Die variabel verstellbaren Verriegelungseinheiten können also von der Rahmenstruktur entfernt und an einer anderen Stelle wieder mit dieser verbunden werden, um die Abstände zwischen den Verriegelungseinheiten zu verändern. Vorzugsweise sind die variabel verstellbaren Verriegelungseinheiten mit der Rahmenstruktur verschraubbar, wobei auch andere lösbare Verbindungsarten in Frage kommen, z.B. Steck- bzw. Bolzenverbindungen. Bei dieser Lösung ergeben sich insbesondere mehrere diskrete Befestigungspositionen für die variabel verstellbaren Verriegelungseinheiten, wobei auch Verbindungsmöglichkeiten mit einer kontinuierlichen Positionsverstellung denkbar sind, beispielsweise basierend auf Langlöchern.

Alternativ kann vorgesehen sein, dass die variabel verstellbaren Verriegelungseinheiten entlang von Führungseinrichtungen der Rahmenstruktur, beispielsweise in Längsrichtung des Anhängers verlaufenden Führungsschienen, bewegbar bzw. verschiebbar sind. In diesem Fall können die variabel verstellbaren Verriegelungseinheiten vorzugsweise kontinuierlich verstellt und mittels Feststellmitteln in einer bestimmten Position reversibel fixiert werden.

In einer weiteren möglichen Ausführungsform ist vorgesehen, dass alle Verriegelungseinheiten variabel verstellbar an der Rahmenstruktur positionierbar sind. Mit anderen Worten handelt es sich bei sämtlichen Verriegelungseinheiten um variabel verstellbare Verriegelungseinheiten. Dadurch ergibt sich eine höhere Flexibilität bei der Anordnung der Container relativ zur Rahmenstruktur. Insbesondere kann dadurch sichergestellt werden, dass sich keine ungünstige Gewichtsverteilung in Bezug auf die Radachsen ergibt. Gerade bei einachsigen oder dreiachsigen Anhängern, bei denen die Radachsen typischerweise mittig an der Rahmenstruktur angeordnet sind, können so die Container ebenfalls mittig an der Rahmenstruktur fixiert werden.

Alternativ können mindestens zwei Verriegelungseinheiten fest mit der Rahmenstruktur verbunden, beispielsweise verschweißt, sein. Die unbeweglichen Verriegelungseinheiten können beispielsweise in einem vorderen Endbereich, in einem hinteren Endbereich und/oder in einem mittleren Bereich der Rahmenstruktur angeordnet sein.

Eine weitere, nicht erfindungsgemäße Möglichkeit, Container mittels des Anhängers zu transportieren, bestünde darin, alle Verriegelungseinheiten fest mit der Rahmenstruktur zu verbinden, beispielsweise zu verschweißen. Dann wären allerdings nur bestimmte Containergröße transportierbar und es müssten mehrere Anhänger mit unterschiedlich angeordneten und/oder ausgebildeten Verriegelungseinheiten vorgehalten werden, um je nach zu transportierender Containergröße den entsprechenden Anhänger zu verwenden. So könnte beispielsweise ein Anhänger für 10'-Container und ein weiterer Anhänger für 20'-Container verwendet werden. Eine weitere Möglichkeit wäre, mittels fest installierter Verriegelungseinheiten mehrere festgelegte Containergrößen am Anhänger zu ermöglichen, beispielsweise einen Anhänger für 20'-, 15'- und 10'-Container und einen anderen Anhänger für 9'- und 8'-Container. Dabei kann jedoch jeweils nur eine begrenzte Anzahl von Containern mit einem ganz bestimmten, definierten Maß transportiert werden. Eine Varianz bzw. Variabilität der Containeraufnahmen, um beispielsweise weitere Größen oder unterschiedliche Container-Standards aufnehmen zu können, ergibt sich dabei nicht.

Gemäß der Erfindung ist vorgesehen, dass die Rahmenstruktur zwei parallel zueinander verlaufende Längsträger und mindestens zwei die Längsträger miteinander verbindende Querträger umfasst. Bevorzugt umfasst die Rahmenstruktur einen vorderen Abschlussquerträger bzw. Stirnträger und einen hinteren Abschlussquerträger (an welchem sich beispielsweise die Beleuchtung und/oder ein Nummernschild befinden können) als Querträger. Zusätzlich kann die Rahmenstruktur einen oder mehrere dazwischenliegende Querträger und ggf. weitere Versteifungen umfassen, um eine ausreichende Stabilität der Rahmenstruktur zu gewährleisten. Alternativ oder zusätzlich können ein oder mehrere Zuggabelquerträger vorgesehen sein.

Die genannten Strukturteile der Rahmenstruktur (Längsträger, Querträger, ggf. Zuggabelquerträger) können fest miteinander verbunden, beispielsweise verschweißt sein.

In einer bevorzugten Ausführungsvariante sind die genannten Strukturteile nicht fest miteinander verbunden, sondern über Schraubverbindungen lösbar miteinander verbunden. Die Strukturteile werden insbesondere einzeln gefertigt und mit entsprechenden Schraubschnittstellen bzw. Verbindungsmitteln versehen, sodass sie separat transportiert und vor Ort im Sinne eines Baukastensystems zusammengebaut werden können. Dies ist beispielsweise dann vorteilhaft, wenn der Anhänger verschifft werden soll, da die Einzelteile separat verpackt und versandt werden können. Optional können die Strukturteile in mehreren unterschiedlichen Anordnungen miteinander verbindbar sein, um beispielsweise unterschiedliche und an die jeweilige Anforderung angepasste Konfigurationen der Rahmenstruktur zu ermöglichen.

Gemäß der Erfindung ist ferner vorgesehen, dass die variabel verstellbaren Verriegelungseinheiten entlang der Längsträger verstellbar sind, sodass der Abstand mindestens zweier Paare von Verriegelungseinheiten zueinander entlang der Längsträger veränderbar ist, um Container mit unterschiedlichen Abmessungen parallel zu den Längsträgern aufzunehmen. Die Anordnung der Verriegelungseinheiten kann also an die Länge der zu transportierenden Container angepasst werden (bzw. an die Breite der Container, falls es sich um einen kurzen Container handelt und dieser quer zur Längsachse des Anhängers transportiert wird).

Zusätzlich ist gemäß der Erfindung vorgesehen, dass die Verriegelungseinheiten derart ausgebildet sind, dass ihr Abstand von den Längsträgern variabel verstellbar ist, um Container mit unterschiedlichen Abmessungen senkrecht zu den Längsträgern aufzunehmen. Die Anordnung der Verriegelungseinheiten kann also an die Breite der zu transportierenden Container angepasst werden (bzw. an die Länge der Container, falls es sich um einen kurzen Container handelt und dieser quer zur Längsachse des Anhängers transportiert wird).

Die variabel verstellbaren Verriegelungseinheiten können entweder direkt mit den Längsträgern oder aber mit anderen Teilen der Rahmenstruktur verbindbar sein.

Beispielsweise könnten die variabel verstellbaren Verriegelungseinheiten an gemeinsamen Elementen bzw. Profilen ausgebildet oder angeordnet sein (z.B. jeweils zwei Verriegelungseinheiten pro Profil), die an einer Oberseite der Rahmenstruktur angeordnet und parallel zur Anhängerlängsachse verschiebbar sind. Diese Profile können Verbindungsmittel zur Arretierung an der Rahmenstruktur in bestimmten Positionen aufweisen. In diesem Fall wären nicht die Verriegelungseinheiten direkt, sondern die genannten Profile mit der Rahmenstruktur (beispielsweise mit den Längsträgern) verbindbar.

In einer weiteren möglichen Ausführungsform ist vorgesehen, dass die variabel verstellbaren Verriegelungseinheiten und die Längsträger jeweils Verbindungsmittel aufweisen (insbesondere Verbindungsmittel zur Bildung einer Schraubverbindung und/oder Steck- bzw. Bolzenverbindung und/oder Einhängeverbindung), welche zur lösbaren Befestigung der Verriegelungseinheiten an den Längsträgern miteinander lösbar verbindbar sind. Bei den Verbindungsmitteln kann es sich um Löcher bzw. Bohrungen zur Aufnahme von Bolzen und/oder Schrauben handeln. Zur leichteren Montage der Verriegelungseinheiten können auch Kombinationen unterschiedlicher Verbindungsmittel vorgesehen sein, z.B. eine erste Einhängeverbindung und eine zweite, die Verriegelungseinheit vollständig festlegende Bolzen- oder Schraubverbindung.

Hierbei sind die Verbindungsmittel der Längsträger derart angeordnet und/oder ausgebildet, dass die Verriegelungseinheiten wahlweise an unterschiedlichen Positionen an den Längsträgern befestigbar sind. Dabei handelt es sich insbesondere um diskret voneinander beabstandete Positionen, die durch die Lage der Verbindungsmittel an den Längsträgern bestimmt sind. Ebenso denkbar ist jedoch auch eine kontinuierliche Verstellung der Verriegelungseinheiten entlang der Längsträger, beispielsweise über die Ausbildung entsprechender Langlöcher in den Längsträgern.

In einer weiteren möglichen Ausführungsform ist vorgesehen, dass die Verriegelungseinheiten außen an der Rahmenstruktur (beispielsweise außen an den genannten Längsträgern) angeordnet sind und vorzugsweise seitlich von der Rahmenstruktur abstehen.

Gemäß der Erfindung ist vorgesehen, dass die variabel verstellbaren Verriegelungseinheiten einzeln und unabhängig voneinander verstellbar und an der Rahmenstruktur positionierbar sind. Dies ermöglicht insbesondere eine einfachere Befestigung der Verriegelungseinheiten an seitlichen Trägern bzw. Längsträgern der Rahmenstruktur.

In einer weiteren möglichen Ausführungsform ist vorgesehen, dass die Verriegelungseinheiten jeweils eine Konsole und ein beweglich an oder in der Konsole gelagertes Verriegelungselement umfassen. Das Verriegelungselement dient der reversiblen Verriegelung mit einem Befestigungselement eines Containers und ist, wie weiter oben beschrieben, als Twistlock ausgebildet. Das Verriegelungselement ist zwischen einer Verriegelungsposition und einer Entriegelungsposition bewegbar. Bei aufgenommenem Container ist das entsprechende Befestigungselement in der Verriegelungsposition des Verriegelungselements sicher und fest mit der Rahmenstruktur verbunden. In der Entriegelungsposition des Verriegelungselements kann das Befestigungselement von der Verriegelungseinheit getrennt werden.

Die Konsolen der variabel verstellbaren Verriegelungseinheiten umfassen vorzugsweise Verbindungsmittel zur lösbaren Befestigung der Verriegelungseinheiten an der Rahmenstruktur, beispielsweise Hakenelemente und/oder Bohrungen bzw. Löcher zur Aufnahme von Schrauben und/oder Bolzen. Die Verbindungsmittel können an einer Verbindungsplatte angeordnet sein, die mit der Konsole verbunden oder einstückig an dieser ausgebildet sein kann.

Die Konsolen können als Stahlprofile ausgebildet sein. Teile der Verriegelungselemente, also der Twistlocks, können in einem Hohlprofil der Konsole angeordnet sein.

In einer weiteren möglichen Ausführungsform ist vorgesehen, dass die Konsole als starre Konstruktion, insbesondere Stahlkonstruktion, mit einer festen Länge ausgebildet ist. Die Längen der Konsolen der in Bezug auf die Anhängerlängsachse einander gegenüberliegenden Verriegelungseinheiten bestimmen dann die Abmessung des aufzunehmenden Containers quer zur Anhängerlängsachse. Soll diese Ausdehnung verändert werden, können die Verriegelungseinheiten vorzugsweise von der Rahmenstruktur abgenommen und andere Verriegelungseinheiten mit kürzeren oder längeren Konsolen angebaut werden.

Alternativ können die Konsolen längenveränderlich ausgebildet sein, sodass sie zur Anpassung der Containerabmessung quer zur Auslegerlängsachse nicht von der Rahmenstruktur abgebaut werden müssen. Vorzugsweise umfassen derartige Verriegelungseinheiten entsprechende Feststellmittel zur Fixierung der Konsole in der eingestellten Länge, damit sich die Länge nicht ungewollt verändern kann. Die Feststellmittel können beispielsweise Schrauben und/oder Bolzen umfassen.

Eine denkbare längenveränderliche Ausgestaltung kann teleskopierbare Konsolen umfassen. Dabei können die Konsolen jeweils ein äußeres Profilteil und ein verschiebbar darin gelagertes inneres Profilteil (oder mehrere ineinander gelagerte, innere Profilteile) umfassen, welche in bestimmten Ausschubpositionen über die genannten Feststellmittel fixierbar sind. Das Ein- und Ausschieben der teleskopierbaren Konsolen kann im einfachsten Fall manuell, optional aber auch über hydraulische, elektrische oder pneumatische Aktuatoren erfolgen. Eine andere Lösung umfasst ein oder mehrere Führungselemente, z.B. Schienen, über welche das Verriegelungselement relativ zur Rahmenstruktur verschiebbar ist. Auch ausklappbare bzw. schwenkbare Konsolen sind denkbar.

In einer weiteren möglichen Ausführungsform ist vorgesehen, dass der Anhänger mindestens zwei Sets aus jeweils mindestens vier lösbar mit der Rahmenstruktur verbindbaren Verriegelungseinheiten umfasst. Die Verriegelungseinheiten mindestens zweier Sets können identisch ausgebildet sein, beispielsweise um zwei oder mehr kleinere Container mittels jeweils vier Verriegelungseinheiten mit dem Anhänger transportierten zu können.

Vorzugsweise sind die Verriegelungseinheiten mindestens zweier Sets unterschiedlich ausgebildet, damit Container unterschiedlicher Größen transportiert werden können. Je nachdem, welche Containergröße (z.B. 8', 9', 10', 15', 16', 20' etc.), welche Containeranzahl (z.B. ein Container, zwei Container etc.) und in welcher Ausrichtung (z.B. längs oder quer zur Anhängerlängsachse) der jeweilige Container transportiert werden soll, wird das passende Set von Verriegelungseinheiten oder mehrere Sets gleichzeitig an den entsprechenden Befestigungspositionen an der Rahmenstruktur angebaut.

Die Verriegelungseinheiten unterschiedlicher Sets können sich beispielsweise in den Längen ihrer Konsolen und/oder in den Ausrichtungen der Verriegelungselemente (Twistlock in der Verriegelungsposition um 90° gedreht, um Container quer zur Anhängerlängsachse zu transportieren) voneinander unterscheiden.

Durch Vorhalten geeigneter unterschiedlicher Sets von Verriegelungseinheiten kann eine beliebige Anzahl unterschiedlicher Container mit nur einem einzigen Anhänger transportiert werden. Der Umbau ist einfach und schnell durchführbar.

In einer weiteren möglichen Ausführungsform ist vorgesehen, dass die Verriegelungseinheiten mindestens zweier verschiedener Sets Konsolen mit unterschiedlichen festen Längen besitzen. Alternativ oder zusätzlich können sich die Verriegelungseinheiten unterschiedlicher Sets beispielsweise in den Ausrichtungen der Verriegelungselemente (Twistlock in der Verriegelungsposition um 90° gedreht) voneinander unterscheiden, um Container quer zur Anhängerlängsachse transportieren zu können. Alternativ oder zusätzlich können manche Verriegelungseinheiten unterschiedliche Höhen (oder beispielsweise zusätzliche Auflageplatten) besitzen, um Container mit unterschiedlich dimensionierten Eckbeschlägen aufnehmen zu können.

Prinzipiell sind beliebige Variationen der Verriegelungseinheiten unterschiedlicher Sets denkbar, um eine beliebig große Palette transportierbarer Containertypen zu erreichen.

In einer weiteren möglichen Ausführungsform ist vorgesehen, dass der Anhänger eine Zugeinrichtung umfasst, an welcher die Kupplungseinrichtung angeordnet oder ausgebildet ist. Die Kupplungseinrichtung kann eine Kugelkupplung und/oder eine DIN-Öse aufweisen. Die Zugeinrichtung kann optional ein Stützrad umfassen.

Die Zugeinrichtung kann mit der Rahmenstruktur starr oder schwenkbar verbunden und beispielsweise als Zuggabel ausgebildet sein. Alternativ oder zusätzlich kann die Zugeinrichtung ein in der Höhe relativ zur Rahmenstruktur verstellbares Kupplungsteil umfassen, an welcher die Kupplungseinrichtung angeordnet ist. Dadurch kann der Anhänger an verschiedene Fahrzeugtypen angepasst werden. Ebenfalls ist denkbar, dass zwischen einem Pkw- und einem Lkw-Betrieb gewechselt werden kann. In diesem Fall kann zusätzlich eine zwischen Kugelkupplung und DIN-Öse wechselbare Auflaufeinrichtung vorgesehen sein. Die Zugeinrichtung kann als stufenlos höhenverstellbare Zugdeichsel ausgebildet sein.

Weiterhin ist erfindungsgemäß vorgesehen, dass der Anhänger als Tandem- oder Tridemanhänger mit zwei oder drei mittig an der Rahmenstruktur gelagerten Radachsen ausgebildet ist. Eine oder mehrere der Radachsen können lenkbar sein.

Weitere Merkmale, Einzelheiten und Vorteile der Erfindung ergeben sich aus den nachfolgend anhand der Figuren erläuterten Ausführungsbeispielen. Es zeigen:
- Fig. 1:: ein Ausführungsbeispiel des erfindungsgemäßen Anhängers in einer perspektivischen Ansicht;
- Fig. 2a-b:: zwei Ausführungsbeispiele für Verriegelungseinheiten des erfindungsgemäßen Anhängers, jeweils in einer perspektivischen Einzelansicht;
- Fig. 3a-b:: zwei Ausführungsbeispiele für Verriegelungseinheiten des erfindungsgemäßen Anhängers, jeweils in einer perspektivischen Ansicht ihrer Montageposition an der Rahmenstruktur;
- Fig. 4a-b:: den erfindungsgemäßen Anhänger in einer ersten Konfiguration zum Transport eines ersten Containers in einer Draufsicht auf den Anhänger und in einer perspektivischen Ansicht des Anhängers mit Container;
- Fig. 5a-b:: den erfindungsgemäßen Anhänger in einer zweiten Konfiguration zum Transport eines zweiten Containers in einer Draufsicht auf den Anhänger und in einer perspektivischen Ansicht des Anhängers mit Container;
- Fig. 6a-b:: den erfindungsgemäßen Anhänger in einer dritten Konfiguration zum Transport zweier dritter Container in einer Draufsicht auf den Anhänger und in einer perspektivischen Ansicht des Anhängers mit Containern; und
- Fig. 7a-b:: den erfindungsgemäßen Anhänger in einer vierten Konfiguration zum Transport eines vierten Containers in einer Draufsicht auf den Anhänger und in einer perspektivischen Ansicht des Anhängers mit Container.

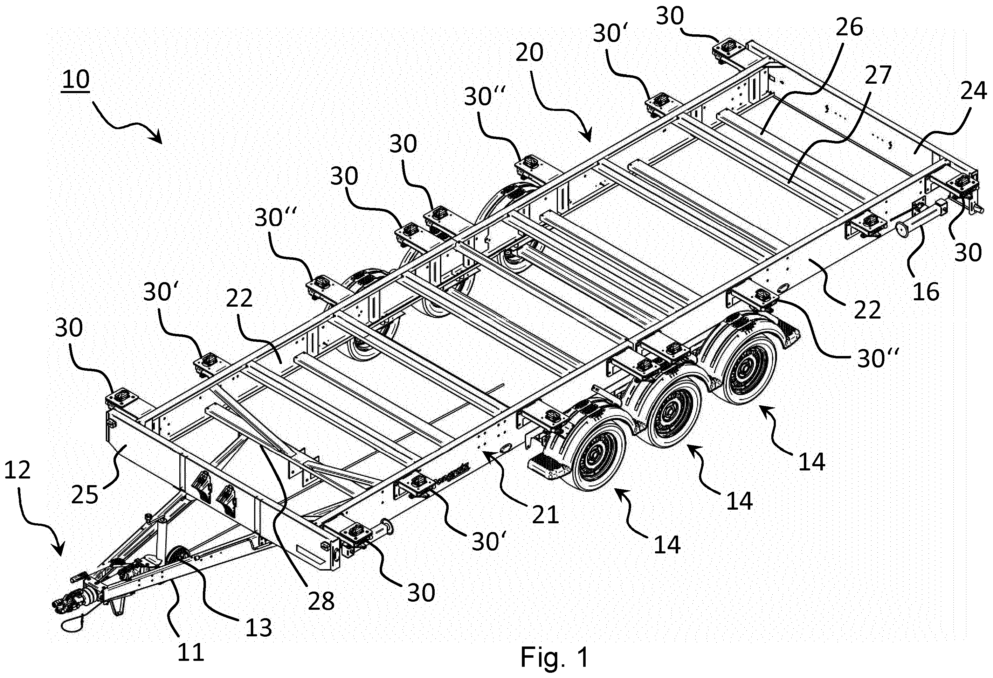

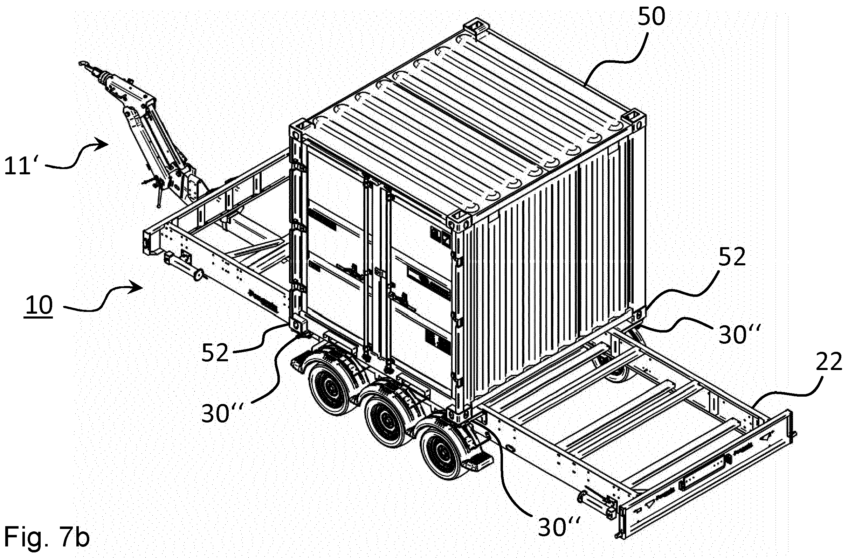

In der Figur 1 ist ein Ausführungsbeispiel des erfindungsgemäßen Anhängers 10 in einer perspektivischen Ansicht gezeigt. Der Anhänger 10 umfasst eine Rahmenstruktur 20 mit zwei parallel zur Längsachse des Anhängers 10 verlaufenden Längsträgern 22 bzw. Achslängsträgern 22 sowie eine Vielzahl von die Längsträger 22 miteinander verbindenden und senkrecht zu diesen verlaufenden Querträgern 24, 25, 26, 27. Ein vorderer Abschlussquerträger 25 (auch als Stirnträger bezeichnet) bildet den vorderen (d.h. in Richtung des angekoppelten Fahrzeugs - hier nicht dargestellt) Abschluss der Rahmenstruktur 20. Den hinteren Abschluss bildet ein hinterer Abschlussquerträger 24 (auch nur als Abschlussträger bezeichnet), an welchem sich auch Rücklichter und ein Nummernschild befinden können (vgl. Fig. 7b). Dazwischen verlaufen mehrere untere Querträger 26 und obere Querträger 27 zwischen den Längsträgern 22 und sorgen für die nötige Stabilität der Rahmenstruktur 20. Darüber hinaus kann die Rahmenstruktur 20 einen Zuggabelquerträger 28 umfassen.

Die Rahmenstruktur 20 bildet insbesondere ein struktursteifes Fahrgestell. Die Längs- und Querträger 22, 24, 25, 26, 27 können fest miteinander verschweißt oder in der Art eines Baukastensystems miteinander verschraubt sein.

Bei dem hier gezeigten Ausführungsbeispiel besitzt der Anhänger 10 drei mittig an der Rahmenstruktur 20 gelagerte Radachsen 14, d.h. ein Tridem-Fahrwerk. Alternativ kann der Anhänger 10 ein Tandem-Fahrwerk umfassen.

Bei dem Ausführungsbeispiel der Figur 1 besitzt der Anhänger 10 eine Zugeinrichtung in Form einer starr mit der Rahmenstruktur 20 verbundenen Zuggabel bzw. Deichsel 11. Vorne an der Spitze der Zuggabel 11 befindet sich eine Kupplungseinrichtung zum Ankuppeln des Anhängers 10 an ein Fahrzeug (bei dem hier gezeigten Ausführungsbeispiel lässt sich der Anhänger 10 mit einem Pkw kuppeln). Die Zugeinrichtung 11 kann ein Stützrad 13 umfassen, wie in der Fig. 1 gezeigt, und ist insbesondere mit dem genannten Zuggabelquerträger 28 verbunden.

Darüber hinaus kann der Anhänger 10 mehrere Stützen 16 aufweisen (siehe Fig. 1), welche beispielsweise seitlich vorne und hinten an den Längsträgern 22 gelagert sein und zum Abstellen bzw. Beladen des Anhängers 10 ausgeklappt oder auf sonstige Weise von einer Lagerposition in eine Stützposition gebracht werden können.

Die genaue Ausgestaltung der typischen Anhängerelemente wie Zugeinrichtung 11, Stützen 16 und Fahrwerk sind für die erfindungswesentliche Funktion des Anhängers 10, d.h. die flexible Aufnahme einer Vielzahl möglicher Containermaße, nicht weiter erheblich und in den Figuren nur beispielhaft dargestellt.

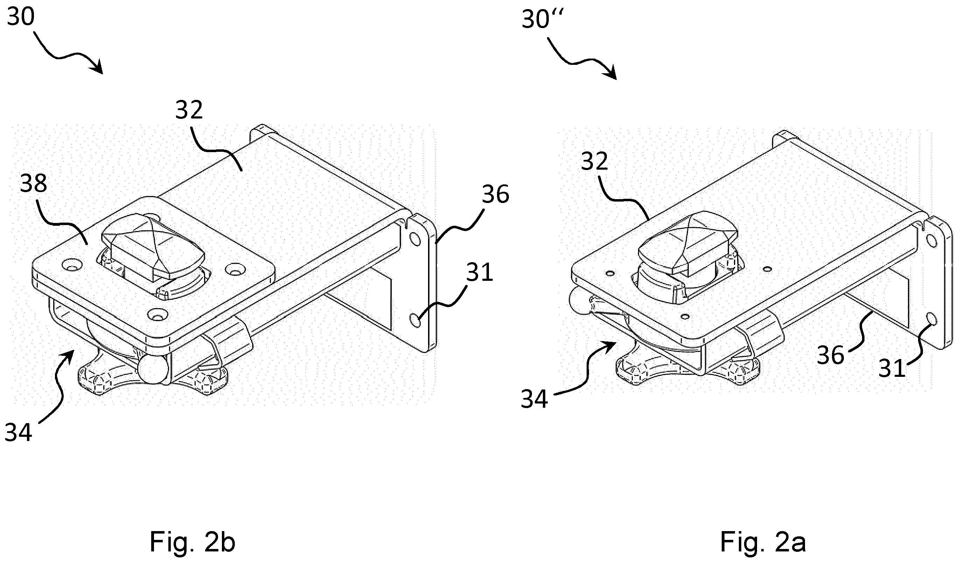

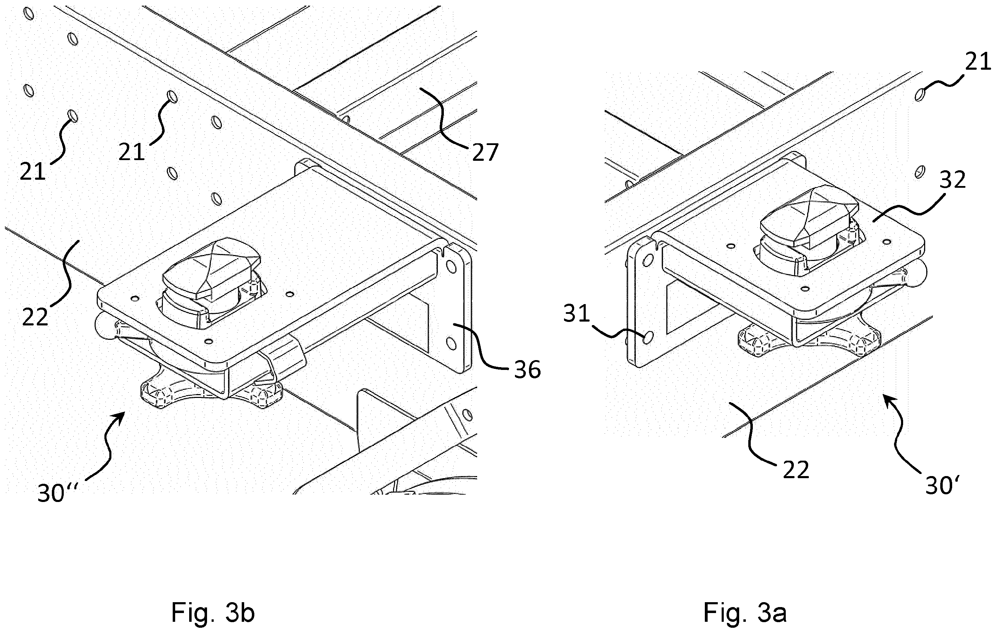

Um eine flexible Aufnahme und sichere Verriegelung eines Containers 50 zu ermöglichen, besitzt der erfindungsgemäße Anhänger 10 mehrere Verriegelungseinheiten 30. In den Figuren sind drei Ausführungsbeispiele für solche Verriegelungseinheiten 30, 30', 30" dargestellt: ein erstes Ausführungsbeispiel 30 ist isoliert in der Figur 2b gezeigt, ein zweites Ausführungsbeispiel 30' ist im an der Rahmenstruktur 20 montierten Zustand in der Figur 3a dargestellt und ein drittes Ausführungsbeispiel 30" ist isoliert in der Figur 2a und im montierten Zustand in der Figur 3b gezeigt. Im Folgenden wird der Kürze halber immer nur das Bezugszeichen 30 verwendet, wenn unabhängig vom konkreten Ausführungsbeispiel allgemein von den Verriegelungseinheiten die Rede ist.

Die Verriegelungseinheiten 30 gemäß den hier gezeigten Ausführungsbeispielen umfassen jeweils einen Twistlock als Verriegelungselement 34, welcher in an sich aus dem Stand der Technik zur Verriegelung von ISO-Containern bekannter Weise ausgebildet sein kann. Der Twistlock 34 ist bei den gezeigten Ausführungsbeispielen manuell über einen Hebel zwischen den Verriegelungs- und Entriegelungspositionen bewegbar. Somit können auf dem Anhänger 10 Standard-Container bzw. ISO-Container 50 mit für Twistlocks geeigneten Eckbeschlägen 52 verriegelt und transportiert werden. Dabei kann es sich beispielsweise um Lagercontainer oder Bürocontainer handeln.

Um die verschiedenen Containergrößen aufnehmen zu können, lassen sich die Verriegelungseinheiten 30 variabel entlang der Längsträger 22 verstellen. Hierzu umfassen die Verriegelungseinheiten 30 jeweils eine Konsole 32, welche ein Hohlprofil besitzt, in dem der Twistlock 34 gelagert ist. An seinem dem Twistlock 34 beabstandeten Ende geht die Konsole 32 in eine Verbindungsplatte 36 über, in der mehrere Bohrungen 31 als Verbindungsmittel ausgebildet sind.

Über die Verbindungsplatten 36 lassen sich die Verriegelungseinheiten 30 seitlich außen an den Längsträgern 22 montieren, insbesondere verschrauben. Um die Positionen der Verriegelungseinheiten 30 an den Längsträgern 22 verändern zu können, weisen die Längsträger 22 nicht nur an zwei Stellen passende Bohrungen bzw. Verbindungsmittel 21 auf, sondern auch an weiteren Positionen. Je nach Containermaß (z.B. 10' oder 20') werden die Verriegelungseinheiten 30 an den passenden Stellen mit den Längsträgern 22 verbunden, sodass der Abstand der Verriegelungseinheiten 30 entlang der Längsträger 22 bzw. Anhängerlängsachse den Abständen der Eckbeschläge 52 des oder der zu lagernden Container 50 entspricht.

Um auch unterschiedliche Containerbreiten (d.h. Abmessungen quer zur Anhängerlängsachse) zu bedienen, können mehrere Sets von Verriegelungseinheiten 30 mit jeweils unterschiedlich langen Konsolen 32 vorhanden sein. Je nach zu transportierendem Container 50 werden die passenden Verriegelungseinheiten 30 mit der korrekten Konsolenlänge an den passenden Verbindungsstellen an den Längsträgern 22 montiert. So weist beispielsweise das in der Figur 3a gezeigte zweite Ausführungsbeispiel des Verriegelungselements 30' eine Konsole 32 mit einer geringeren Länge auf als das in der Figur 3b gezeigte dritte Ausführungsbeispiel 30".

Abgesehen davon unterscheiden sich die genannten Verriegelungseinheiten 30', 30" auch noch darin, dass die Stellungen der Twistlocks 34 um 90° zueinander gedreht sind. Dadurch kann mit einem Set von Verriegelungseinheiten 30" des dritten Ausführungsbeispiels ein kürzerer Container 50 quer (d.h. die Längsachse des Containers 50 entlang von dessen größter Ausdehnung steht senkrecht zur Anhängerlängsachse) gelagert werden, vgl. Fig. 7b.

Die Verriegelungseinheiten 30 des ersten Ausführungsbeispiels (vgl. Fig. 2b) weisen zusätzlich an der Oberseite eine Auflageplatte 38 mit einer Längsnut, durch die das Verriegelungsstück des Twistlocks 34 ragt, auf. Dadurch können Container 50 mit geringerer Eckbeschlagdicke (z.B. 6 mm Dicke) transportiert werden.

Prinzipiell sind beliebige Modifikationen denkbar, um die Verriegelungseinheiten an die gewünschten Container 50 bzw. Eckbeschlagformen anzupassen. Ebenso ist es möglich, mittels des Anhängers 10 Container 50 zu verriegeln und zu transportieren, die nicht den Standard-Containern entsprechen oder gar eine völlig andere Funktion besitzen (z.B. offene Container).

In der Figur 1 ist lediglich zu Illustrationszwecken der Anhänger 10 gleichzeitig mit mehreren Sets von jeweils vier Verriegelungseinheiten 30, 30', 30" gemäß den drei in den Figuren 2a-3b gezeigten Ausführungsbeispielen ausgestattet.

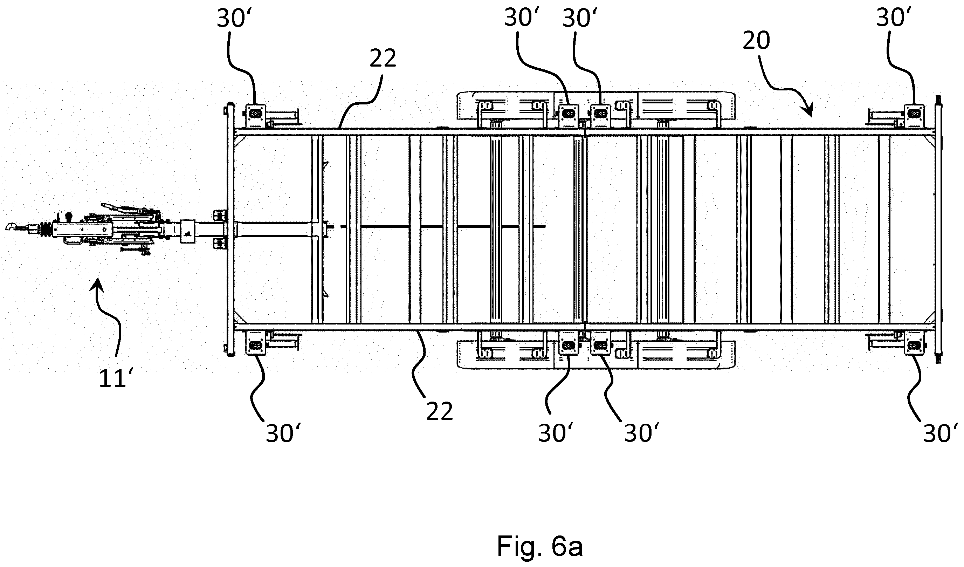

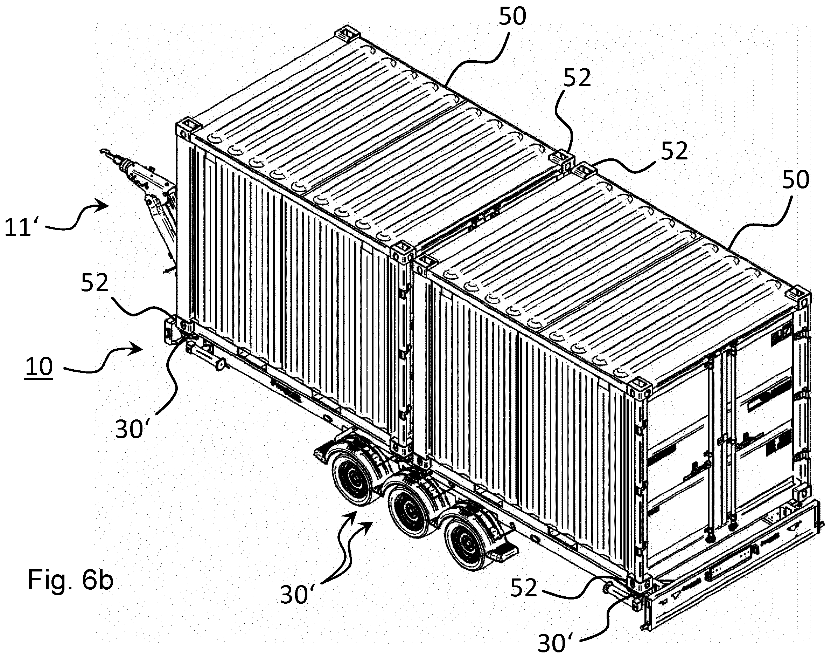

Zwei Sets von Verriegelungseinheiten 30 des ersten Ausführungsbeispiels (vgl. Fig. 2b) sind hintereinander an den Längsträgern 22 montiert, sodass zwei kleinere Container 50 (z.B. zwei 10'-Container) gleichzeitig transportiert werden können. Die Figur 6a zeigt eine Draufsicht auf den Anhänger 10, welcher nur mit diesen zwei Sets von Verriegelungseinheiten 30 ausgestattet ist. In der Figur 6b ist eine perspektivische Ansicht des Anhängers 10 zusammen mit den auf der Rahmenstruktur 20 gelagerten und mit den Verriegelungseinheiten 30 verriegelten Containern 50 gezeigt. Wie viele Container welcher Größe gleichzeitig hintereinander auf dem Anhänger 10 gelagert werden können, wird von der Gesamtlänge der Rahmenstruktur 20 bestimmt. Prinzipiell ist es denkbar, mehr als zwei Container 50 gleichzeitig zu transportieren, wobei die maximal zulässigen Achslasten und eine geeignete Auslegung des Fahrwerks zu berücksichtigen sind.

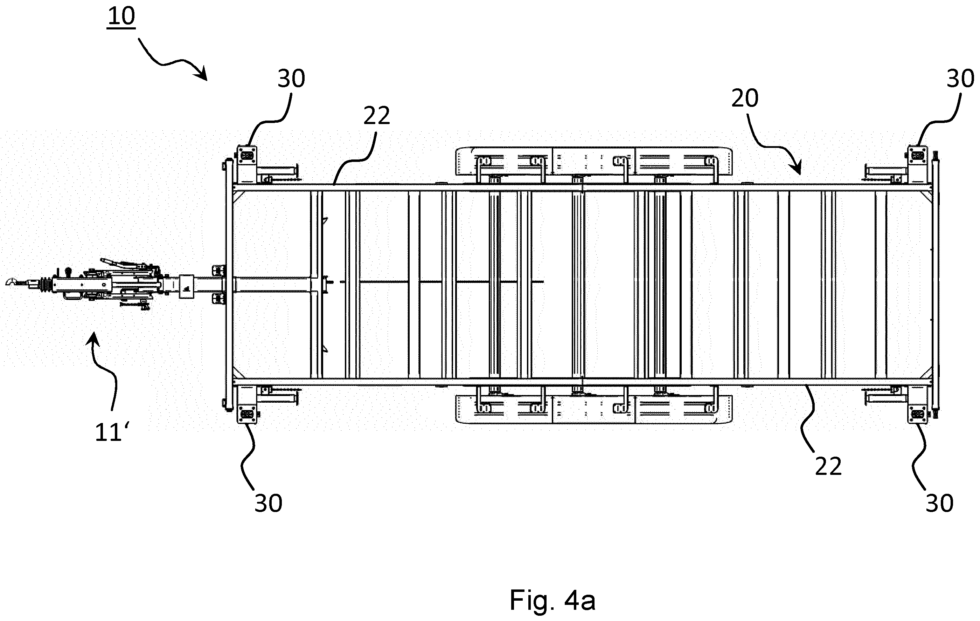

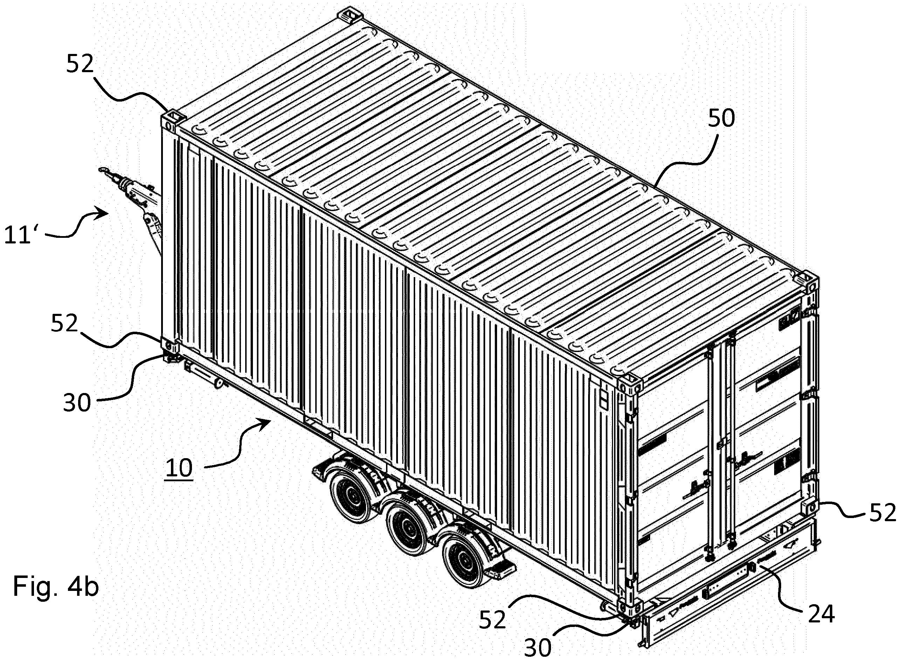

Um anstelle zweier 10'-Container einen 20'-Container (die Abmessungen sind nur beispielhaft genannt) zu transportieren, können die vier mittig im Bereich der Radachsen 14 positionierten Verriegelungseinheiten 30 abgebaut werden. Dadurch ergibt sich die Konfiguration, die in der Figur 4a wiederum in einer Draufsicht auf den Anhänger 10 gezeigt ist. Die Figur 4b zeigt den auf dem derart umgerüsteten Anhänger 10 gelagerten Container 50.

Um auch dazwischenliegende Containermaße abzudecken, können die vier Verriegelungseinheiten 30 variabel entlang der Längsträger 22 positioniert werden. Hierfür weisen die Längsträger 22 an den geeigneten Stellen entsprechende Verbindungsmittel 21 auf.

An dieser Stelle ist zu bemerken, dass die Verriegelungseinheiten 30 der Figur 4a sowie die in der Figur 1 ganz vorne und hinten angeordneten Verriegelungseinheiten 30 mit der oben erwähnten zusätzlichen Auflageplatte 38 gezeigt sind. Die entsprechenden Verriegelungseinheiten 30 können Teil eines eigenen Sets sein, wurden zuvor aber der Einfachheit halber zusammen mit den Verriegelungseinheiten 30 der Figur 6a den gleichen Sets zugeordnet. Derartige Auflageplatten 38 können bei jeder der gezeigten Ausführungsformen vorhanden sein oder nicht, je nach Endbeschlagdicke.

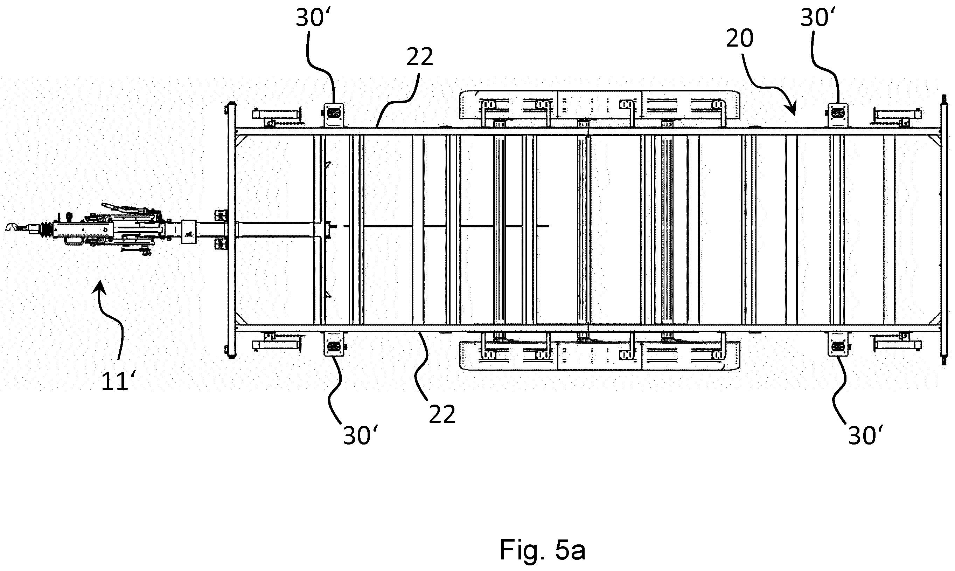

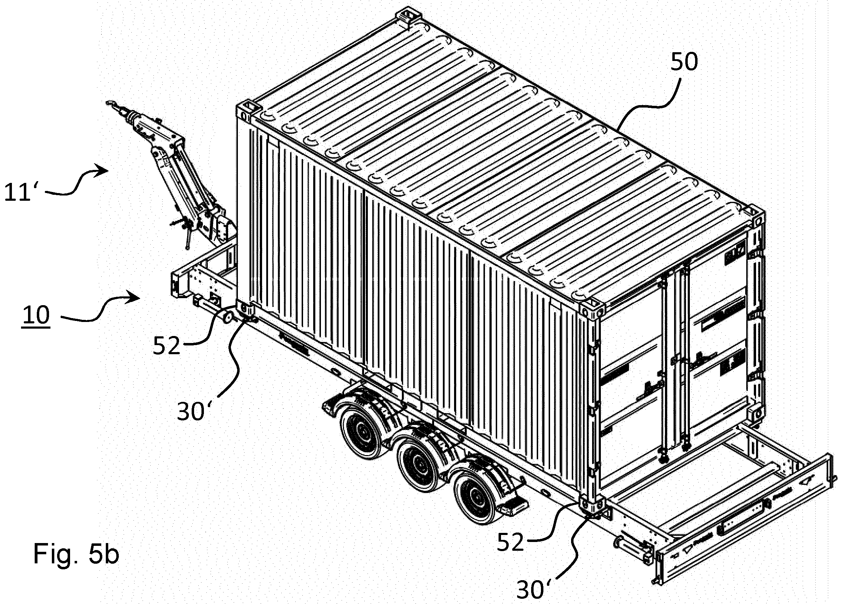

In der Figur 1 ist ferner zu erkennen, dass ein weiteres Set von Verriegelungseinheiten 30' des zweiten Ausführungsbeispiels (vgl. Fig. 3a) an den Längsträgern 22 montiert ist. Diese besitzen kürzere Konsolen 32, um Container 50 mit einer geringeren Breite aufnehmen zu können. Die Figur 5a zeigt eine Draufsicht auf den Anhänger 10, welcher nur mit diesem Set von Verriegelungseinheiten 30' ausgestattet ist. In der Figur 5b ist eine perspektivische Ansicht des Anhängers 10 zusammen mit dem auf der Rahmenstruktur 20 gelagerten und mit den Verriegelungseinheiten 30' verriegelten Container 50 gezeigt. Hierbei kann es sich beispielsweise um einen 15'-Lagercontainer handeln, welcher eine geringere Breite (z.B. 2.2 m) im Vergleich zu 10'-Lagercontainern (vgl. Fig. 6b) oder 20'-Lagercontainern (vgl. Fig. 4b) mit jeweils einer etwas größeren Breite (z.B. 2.438 m) aufweisen kann.

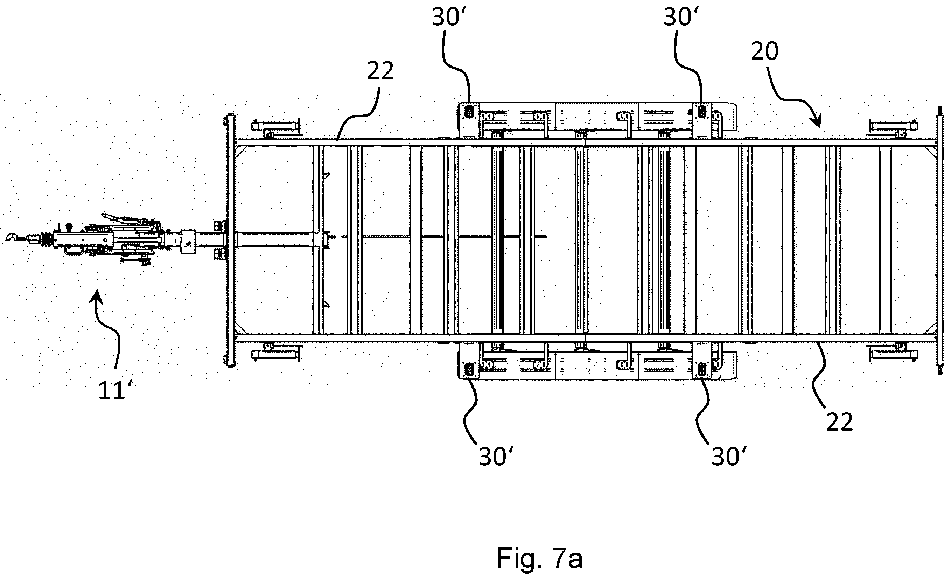

Schließlich zeigt die Figur 1 ein drittes Set von Verriegelungseinheiten 30" des dritten Ausführungsbeispiels (vgl. Fig. 2a und 3b). Diese besitzen einen um 90° gedrehten Twistlock 34, damit ein kürzerer Container 50 mittig am Anhänger 10 und quer in seiner Ausrichtung transportiert werden kann. Dies ist in der Figur 7b dargestellt, eine entsprechende Draufsicht auf den nur mit diesem Set ausgestatteten Anhänger 10 zeigt die Figur 7a.

In der Praxis werden insbesondere nur die für den oder die transportierten Container 50 tatsächliche benötigten Sets von Verriegelungseinheiten 30 an den Längsträger 22 befestigt, während die übrigen Sets abgebaut sein können. Diese können z.B. für andere Einsätze vorgehalten oder möglicherweise an bzw. in einer optional am Anhänger 10 vorgesehenen Lagervorrichtung aufbewahrt werden (nicht gezeigt).

Mögliche Kombinationen von transportierbaren Containern 50 könnten sein: Ein einzelner 20'-Container; ein einzelner 16'-Container; ein einzelner 15'-Container; ein einzelner 10'-Container; zwei 10'-Container hintereinander; zwei 9'-Container hintereinander; zwei 8'-Container hintereinander; ein 10'-Container und ein 9'-Container hintereinander; ein 10'-Container und ein 8'-Container hintereinander; ein 9'-Container und ein 8'-Container hintereinander. Diese Aufzählung ist selbstverständlich nicht abschließend, sondern lediglich beispielhaft.

Anstelle mehrerer Sets von Verriegelungseinheiten 30 unterschiedlicher (fixer) Längen könnten auch längenverstellbare Verriegelungseinheiten vorgesehen sein, um die Abstände quer zur Anhängerlängsachse kontinuierlich oder in diskreten Abständen an die gewünschten Containerbreiten anpassen zu können. Alternativ oder zusätzlich könnten einige der Verriegelungseinheiten 30 fest mit den Längsträgern 22 verbunden und nur einige der Verriegelungseinheiten 30 variabel verstellbar sein. Alternativ oder zusätzlich könnten die Verriegelungseinheiten 30 paarweise miteinander verbunden und zusammen verstellbar sein.

Bei den in den Figuren 4a-7b gezeigten Ausführungsbeispielen besitzt der Anhänger 10 nicht die starre Deichsel 11 der Figur 1 als Zugeinrichtung 11, sondern eine alternativ mögliche höhenverstellbare Zugeinrichtung 11'. Diese umfasst ein höhenverstellbares Schwenkteil, an welchem sich die Kupplungseinrichtung 12 befindet. Diese kann für den Einsatz am Pkw oder am Lkw entsprechend umrüstbar sein (z.B. zwischen Kugelkupplung und DIN-Öse). Prinzipiell können aber bei allen Ausführungsbeispielen beliebige Zugeinrichtungen 11 verwendet werden, um den Anhänger 10 mit einem beliebigen Fahrzeug kuppeln zu können.

### Bezugszeichenliste:

- 10: Anhänger
- 11: Zugeinrichtung
- 12: Kupplungseinrichtung
- 13: Stützrad
- 14: Radachse
- 16: Stütze
- 20: Rahmenstruktur
- 22: Längsträger
- 24: Hinterer Abschlussquerträger (Abschlussträger)
- 25: Vorderer Abschlussquerträger (Stirnträger)
- 26: Unterer Querträger
- 27: Oberer Querträger
- 28: Zuggabelquerträger
- 30: Verriegelungseinheit
- 31: Verbindungsmittel
- 32: Konsole
- 34: Verriegelungselement (Twistlock)
- 36: Verbindungsplatte
- 38: Auflageplatte
- 50: Container
- 52: Befestigungselement (Eckbeschlag)

## Patentansprüche

1. Anhänger (10) für einen Pkw zum Transportieren wahlweise eines oder mehrerer Container (50) der Containergröße 20' oder kleiner, wahlweise längs oder quer zur Anhängerquerachse, wobei es sich bei dem Anhänger (10) um einen Tandem- oder Tridemanhänger mit einer Rahmenstruktur (20) und zwei oder drei mittig an der Rahmenstruktur (20) gelagerten Radachsen (14) handelt, und wobei der Anhänger (10) eine Kupplungseinrichtung (12) zum lösbaren Kuppeln mit einem Pkw umfasst, und wobei die Rahmenstruktur (20) zwei parallel zueinander verlaufende Längsträger (22) und mindestens zwei die Längsträger (22) miteinander verbindende Querträger (24, 25, 26, 27) umfasst,
**dadurch gekennzeichnet,**
**dass** der Anhänger (10) mehrere Verriegelungseinheiten (30) zur lösbaren Verriegelung mit entsprechenden Befestigungselementen (52), insbesondere Eckbeschlägen, eines Containers (50) umfasst, wobei mindestens zwei Verriegelungseinheiten (30) einzeln und unabhängig voneinander variabel verstellbar an der Rahmenstruktur (20) positionierbar sind, wobei die Verriegelungseinheiten (30) jeweils einen Twistlock (34) zur Verriegelung mit einem Eckbeschlag (52) eines Containers (50) umfassen, wobei die variabel verstellbaren Verriegelungseinheiten (30) entlang der Längsträger (22) verstellbar sind, sodass der Abstand mindestens zweier Paare von Verriegelungseinheiten (30) zueinander entlang der Längsträger (22) veränderbar ist, um Container (50) mit unterschiedlichen Abmessungen parallel zu den Längsträgern (22) aufzunehmen, und wobei die Verriegelungseinheiten (30) derart ausgebildet sind, dass ihr Abstand von den Längsträgern (22) variabel verstellbar ist, um Container (50) mit unterschiedlichen Abmessungen senkrecht zu den Längsträgern (22) aufzunehmen.

2. Anhänger (10) nach Anspruch 1, wobei die Twistlocks (34) manuell betätigbar sind.

3. Anhänger (10) nach einem der vorhergehenden Ansprüche, wobei die variabel verstellbaren Verriegelungseinheiten (30) lösbar mit der Rahmenstruktur (20) verbindbar, insbesondere verschraubbar, oder entlang von Führungseinrichtungen der Rahmenstruktur (20) bewegbar sind.

4. Anhänger (10) nach einem der vorhergehenden Ansprüche, wobei alle Verriegelungseinheiten (30) variabel verstellbar an der Rahmenstruktur (20) positionierbar sind.

5. Anhänger (10) nach einem der vorhergehenden Ansprüche, wobei die Längs- und Querträger (22, 24, 25, 26, 27) über Schraubverbindungen lösbar miteinander verbunden sind.

6. Anhänger (10) nach einem der beiden vorhergehenden Ansprüche, wobei die variabel verstellbaren Verriegelungseinheiten (30) und die Längsträger (22) jeweils Verbindungsmittel (21), insbesondere zur Bildung einer Schraub- und/oder Steckverbindung, aufweisen, welche zur lösbaren Befestigung der Verriegelungseinheiten (30) miteinander verbindbar sind, wobei die Verbindungsmittel (21) der Längsträger (22) derart angeordnet und/oder ausgebildet sind, dass die Verriegelungseinheiten (30) wahlweise an unterschiedlichen Positionen an den Längsträgern (22) befestigbar sind.

7. Anhänger (10) nach einem der vorhergehenden Ansprüche, wobei die Verriegelungseinheiten (30) außen an der Rahmenstruktur (20) angeordnet sind und vorzugsweise seitlich von der Rahmenstruktur (20) abstehen.

8. Anhänger (10) nach einem der vorhergehenden Ansprüche, wobei die Verriegelungseinheiten (30) jeweils eine Konsole (32) und ein beweglich an oder in der Konsole (32) gelagertes Verriegelungselement (34), insbesondere einen Twistlock, zur Verriegelung mit einem Befestigungselement (52) eines Containers (50) umfassen, wobei das Verriegelungselement (34) zwischen einer Verriegelungsposition und einer Entriegelungsposition bewegbar ist, wobei die Konsolen (32) der variabel verstellbaren Verriegelungseinheiten (30) vorzugsweise Verbindungsmittel (31) zur lösbaren Befestigung der Verriegelungseinheiten (30) an der Rahmenstruktur (20) umfassen.

9. Anhänger (10) nach dem vorhergehenden Anspruch, wobei die Konsole (32) als starre Konstruktion, insbesondere Stahlkonstruktion, mit einer festen Länge ausgebildet ist oder wobei die Konsole (32) längenveränderlich ausgebildet ist und insbesondere Feststellmittel zur Fixierung der Konsole (32) in einer von mindestens zwei unterschiedlichen Längen umfasst.

10. Anhänger (10) nach einem der vorhergehenden Ansprüche, umfassend mindestens zwei Sets aus jeweils mindestens vier lösbar mit der Rahmenstruktur (20) verbindbaren Verriegelungseinheiten (30), wobei vorzugsweise die Verriegelungseinheiten (30) mindestens zweier Sets unterschiedlich ausgebildet sind.

11. Anhänger (10) nach den beiden vorhergehenden Ansprüchen, wobei die Verriegelungseinheiten (30) mindestens zweier verschiedener Sets Konsolen (32) mit unterschiedlichen festen Längen besitzen.

12. Anhänger (10) nach einem der vorhergehenden Ansprüche, umfassend eine mit der Rahmenstruktur (20) starr oder schwenkbar verbundene Zugeinrichtung (11), an welcher die Kupplungseinrichtung (12) angeordnet oder ausgebildet ist, wobei die Zugeinrichtung (11) vorzugsweise als Zuggabel ausgebildet ist und/oder ein in der Höhe relativ zur Rahmenstruktur (20) verstellbares Kupplungsteil mit der Kupplungseinrichtung (12) umfasst.

## Claims

1. Trailer (10) for a passenger car for transporting optionally one or more containers (50) of the container size 20' or smaller, optionally longitudinally or transversely to the trailer transverse axis, wherein the trailer (10) is a tandem or tridem trailer having a frame structure (20) and two or three wheel axles (14) mounted centrally on the frame structure (20), and wherein the trailer (10) comprises a coupling device (12) for releasably coupling to a passenger car, and wherein the frame structure (20) comprises two longitudinal beams (22) extending parallel to one another and at least two cross members (24, 25, 26, 27) connecting the longitudinal beams (22) to one another,
**characterized in that**
the trailer (10) comprises a plurality of locking units (30) for releasable locking with corresponding fastening elements (52), in particular corner castings, of a container (50), wherein at least two locking units (30) are positionable variably on the frame structure (20) individually and independently of one another, wherein the locking units (30) each comprise a twistlock (34) for locking with a corner casting (52) of a container (50), wherein the variably adjustable locking units (30) are adjustable along the longitudinal beams (22), such that the spacing of at least two pairs of locking units (30) relative to one another along the longitudinal beams (22) is changeable in order to receive containers (50) having different dimensions parallel to the longitudinal beams (22), and wherein the locking units (30) are designed such that their spacing from the longitudinal beams (22) is variably adjustable in order to receive containers (50) having different dimensions perpendicular to the longitudinal beams (22).

2. Trailer (10) according to claim 1, wherein the twistlocks (34) are manually operable.

3. Trailer (10) according to one of the preceding claims, wherein the variably adjustable locking units (30) are releasably connectable to the frame structure (20), in particular screwable thereto, or movable along guide devices of the frame structure (20).

4. Trailer (10) according to one of the preceding claims, wherein all locking units (30) are positionable variably on the frame structure (20).

5. Trailer (10) according to one of the preceding claims, wherein the longitudinal and cross members (22, 24, 25, 26, 27) are releasably connected to one another by means of screw connections.

6. Trailer (10) according to one of the two preceding claims, wherein the variably adjustable locking units (30) and the longitudinal beams (22) each have connecting means (21), in particular for forming a screw connection and/or plug connection, which are connectable to one another for releasable fastening of the locking units (30), wherein the connecting means (21) of the longitudinal beams (22) are arranged and/or designed such that the locking units (30) can optionally be fastened at different positions on the longitudinal beams (22).

7. Trailer (10) according to one of the preceding claims, wherein the locking units (30) are arranged on the outside of the frame structure (20) and preferably project laterally from the frame structure (20).

8. Trailer (10) according to one of the preceding claims, wherein the locking units (30) each comprise a console (32) and a locking element (34), mounted movably on or in the console (32), in particular a twistlock, for locking with a fastening element (52) of a container (50), wherein the locking element (34) is movable between a locking position and an unlocking position, wherein the consoles (32) of the variably adjustable locking units (30) preferably comprise connecting means (31) for releasable fastening of the locking units (30) to the frame structure (20).

9. Trailer (10) according to the preceding claim, wherein the console (32) is designed as a rigid construction, in particular a steel construction, with a fixed length, or wherein the console (32) is designed with variable length and in particular comprises fixing means for fixing the console (32) in one of at least two different lengths.

10. Trailer (10) according to one of the preceding claims, comprising at least two sets each of at least four locking units (30) that can each be releasably connected to the frame structure (20), wherein preferably the locking units (30) of at least two sets are designed differently.

11. Trailer (10) according to the two preceding claims, wherein the locking units (30) of at least two different sets have consoles (32) with different fixed lengths.

12. Trailer (10) according to one of the preceding claims, comprising a towing device (11) rigidly or pivotably connected to the frame structure (20), on which the coupling device (12) is arranged or formed, wherein the towing device (11) is preferably designed as a drawbar and/or comprises a coupling part having the coupling device (12), said coupling part being adjustable in height relative to the frame structure (20).

## Revendications

1. Remorque (10) pour une voiture particulière destinée au transport, au choix, d'un ou de plusieurs conteneurs (50) de taille de conteneur 20' ou inférieure, au choix longitudinalement ou transversalement par rapport à l'axe transversal de la remorque, la remorque (10) étant une remorque tandem ou tridem comportant une structure de châssis (20) et deux ou trois essieux de roues (14) montés au centre sur la structure de châssis (20), et la remorque (10) comprenant un dispositif d'attelage (12) pour un attelage amovible à une voiture particulière, et la structure de châssis (20) comprenant deux longerons (22) s'étendant parallèlement l'un à l'autre et au moins deux traverses (24, 25, 26, 27) reliant les longerons (22) l'un à l'autre,
**caractérisée en ce que**
la remorque (10) comprend plusieurs unités de verrouillage (30) pour un verrouillage amovible avec des éléments de fixation correspondants (52), notamment des pièces de coin, d'un conteneur (50), au moins deux unités de verrouillage (30) pouvant être positionnées de manière variable sur la structure de châssis (20) individuellement et indépendamment l'une de l'autre, les unités de verrouillage (30) comprenant chacune un twistlock (34) pour le verrouillage avec une pièce de coin (52) d'un conteneur (50), les unités de verrouillage (30) réglables de manière variable étant réglables le long des longerons (22), de telle sorte que l'espacement d'au moins deux paires d'unités de verrouillage (30) les unes par rapport aux autres le long des longerons (22) peut être modifié afin de recevoir des conteneurs (50) présentant des dimensions différentes parallèlement aux longerons (22), et les unités de verrouillage (30) étant conçues de telle sorte que leur espacement par rapport aux longerons (22) est réglable de manière variable afin de recevoir des conteneurs (50) présentant des dimensions différentes perpendiculairement aux longerons (22).

2. Remorque (10) selon la revendication 1, dans laquelle les twistlocks (34) peuvent être actionnés manuellement.

3. Remorque (10) selon l'une des revendications précédentes, dans laquelle les unités de verrouillage (30) réglables de manière variable peuvent être reliées de manière amovible à la structure de châssis (20), en particulier y être vissées, ou être déplacées le long de dispositifs de guidage de la structure de châssis (20).

4. Remorque (10) selon l'une des revendications précédentes, dans laquelle toutes les unités de verrouillage (30) peuvent être positionnées de manière variable sur la structure de châssis (20).

5. Remorque (10) selon l'une des revendications précédentes, dans laquelle les longerons et les traverses (22, 24, 25, 26, 27) sont reliés de manière amovible les uns aux autres au moyen de liaisons vissées.

6. Remorque (10) selon l'une des deux revendications précédentes, dans laquelle les unités de verrouillage (30) réglables de manière variable et les longerons (22) présentent chacun des moyens de liaison (21), notamment pour former une liaison vissée et/ou enfichable, lesquels peuvent être reliés les uns aux autres pour la fixation amovible des unités de verrouillage (30), les moyens de liaison (21) des longerons (22) étant disposés et/ou conçus de telle sorte que les unités de verrouillage (30) puissent être fixées, au choix, à différentes positions sur les longerons (22).

7. Remorque (10) selon l'une des revendications précédentes, dans laquelle les unités de verrouillage (30) sont disposées à l'extérieur de la structure de châssis (20) et dépassent de préférence latéralement de la structure de châssis (20).

8. Remorque (10) selon l'une des revendications précédentes, dans laquelle les unités de verrouillage (30) comprennent chacune une console (32) et un élément de verrouillage (34) monté mobile sur ou dans la console (32), en particulier un twistlock, pour le verrouillage avec un élément de fixation (52) d'un conteneur (50), l'élément de verrouillage (34) pouvant être déplacé entre une position de verrouillage et une position de déverrouillage, les consoles (32) des unités de verrouillage (30) réglables de manière variable comprenant de préférence des moyens de liaison (31) pour la fixation amovible des unités de verrouillage (30) à la structure de châssis (20).

9. Remorque (10) selon la revendication précédente, dans laquelle la console (32) est conçue comme une construction rigide, en particulier une construction en acier, avec une longueur fixe, ou la console (32) est conçue avec une longueur variable et comprend en particulier des moyens de blocage pour fixer la console (32) dans l'une d'au moins deux longueurs différentes.

10. Remorque (10) selon l'une des revendications précédentes, comprenant au moins deux jeux comprenant chacun au moins quatre unités de verrouillage (30) pouvant chacune être reliées de manière amovible à la structure de châssis (20), les unités de verrouillage (30) d'au moins deux jeux étant de préférence conçues différemment.

11. Remorque (10) selon les deux revendications précédentes, dans laquelle les unités de verrouillage (30) d'au moins deux jeux différents possèdent des consoles (32) présentant des longueurs fixes différentes.

12. Remorque (10) selon l'une des revendications précédentes, comprenant un dispositif de traction (11) relié rigidement ou de manière pivotante à la structure de châssis (20), sur lequel le dispositif d'attelage (12) est disposé ou formé, le dispositif de traction (11) étant de préférence conçu comme un timon et/ou comprenant une pièce d'attelage munie du dispositif d'attelage (12), ladite pièce d'attelage étant réglable en hauteur par rapport à la structure de châssis (20).
